# EUROPEAN PATENT APPLICATION

(11) **EP 1 122 118 A1**
(43) Date of publication of application: **08.08.2001**
(21) Application number: 01660024.9
(22) Date of filing: 01.02.2001
(51) Int. Cl.: B60N 2/14, B60N 2/16, B60N 2/24

(54) **Turning device for turning the seat of a vehicle**

(30) Priority: 01.02.2000 FI 20000214
(71) Applicant: Powerstyle KY, 13130 Hämeenlinna (FI)
(72) Inventor: Niemi, Pertti, 16900 Lammi (FI)
(74) Representative: Hakola, Unto Tapani

(57) **Abstract**

A turning device for turning a seat of a vehicle is intended to be attached to the vehicle and it includes a body (2) and a part attached turnable thereto, to which part the seat can be fixed. To the body (2) a height adjustment mechanism (3) is fixed, containing attachment points to the vehicle, and to said mechanism an actuator (5) is coupled to transfer the mechanism (3) and to change the distance between the attachment points and the body (2) of the turning device. The height adjustment mechanism (3) includes arms (4) pivotally connected to the body (2), which arms, when the turning place is mounted in its place, form an articulated quadrangle structure, the shape of which can be changed and stiffened by means of the actuator (5) that can change its length.

## Description

The invention relates to a turning device for turning the seat of a vehicle, which is intended to be fixed to the vehicle and which includes a body and a part attached turnable thereto, to which part the seat can be fixed.

Finnish patent 76740 discloses a turning device comprising two plates, which are journalled together in such a manner that the upper plate and the seat thereon can be turned outwards from the top of the lower plate, which is fixed to the floor of a vehicle. The purpose of such a turning device is to make it easier for disabled persons to get in or out of a car. The lower plate contains rollers that support the upper plate during the turning movement and a curved, elongated opening whose centre of curvature is the pivot point located at the bearing in the corner of the plates. Via this opening it is possible to bring a lug extending downwards from the upper plate through the opening and support the upper plate to the other side of the opening by means of rollers bearing against on the outer surface of the plate in such a manner that the plates are held together well during the turning movement and bending forces are not applied on the bearing. By means of this device a good operating reliability is attained, and it has proved to function well when persons whose moving ability is impaired due to a handicap or old age move into a vehicle or out of a vehicle by means of the seat.

Finnish utility model 1171 (utility model application U930588) also discloses a turning device, by means of which a seat can be shifted at the same time in the height direction when the upper plate is turned with respect to the lower plate. Thus, the turning device contains a guiding track connected to one of the plates, wherein a guiding element connected to the opposite plate, while in contact with this guiding track, increases the distance between the plates that remain parallel to each other, when the plate supporting the seat turns outwards. Thus, the seat is positioned on a higher level to a receiving position when it is turned outwards.

The aforementioned turning devices are fixed to the floor of a vehicle by means of suitable fixing members in such a manner that the lower plate is fixed immovably and the seat of the vehicle is placed on the upper plate turning in the horizontal plane with respect to the lower plate.

Although the aforementioned utility model 1171 presents a functional solution, by means of which it is possible to temporarily change the height of a seat, a problematic aspect is that the turning seat is not necessarily always positioned on the optimal height for the person using the seat.

The purpose of the invention is to eliminate the drawbacks of prior art and to present a turning device for turning the seat of a vehicle, in which individual needs can be taken into account even better. To attain this purpose, the turning device is primarily characterized in that to the body of the turning device, i.e. to a non-turnable plate, a height adjustment mechanism is attached which includes attachment points for the vehicle, and to which an actuator is coupled to move the mechanism and to change the distance between the attachment points and the body of the turning device.

The height adjustment mechanism is integrated in the turning device to form a part thereof, wherein the body of the turning device (the lower, stationary plate) can be attached to the floor of the vehicle through the mechanism. The attachment points that in the practice have been used in prior art turning devices now become parts of a moving mechanism. The entire turning plate can be lifted up and lowered down by means of an actuator, wherein the seat fixed on top of the same on the upper turnable plate can always be positioned on a suitable level of height in the vehicle.

The height adjustment mechanism can, for example, be formed of arms pivotable in the vertical plane, which arms are positioned in a suitable manner, for example one arm close to each corner of the lower, stationary plate. The arms can be pivoted, and they can be locked by means of the actuator. The foremost arms and the rearmost arms can be connected together to form pairs.

The arms can form a quadrangle structure, wherein their articulation points to the body of the turning plate and the articulation points to the attachment point at the opposite ends form the corner points of the quadrangle. When the turning device is fixed to its place, such a quadrangle may have such a shape that when the arms are pivoted, the inclination of the turning device (plane of the turning plates) is also changed, or it may be a so-called articulated parallelogram structure, wherein the plates always remain in parallel relationship when the height position changes.

The principle of the actuator may be hydraulic, pneumatic or electric, but a mechanical, manually operated actuator is also possible. The actuator is of a variable-length type, wherein, when it is fixed to the mechanism in a suitable manner, it also changes the distance of the body of the turning device from the floor level or any other base to which the turning device is attached when the length of the actuator is changed.

In the following, the invention will be described in more detail with reference to the appended drawings, in which
- Fig. 1: shows the principle of the turning device according to the invention in a side view,
- Fig. 2: shows a top-view of the turning device, and
- Fig. 3: shows a manner in which an actuator can be coupled to a mechanism.

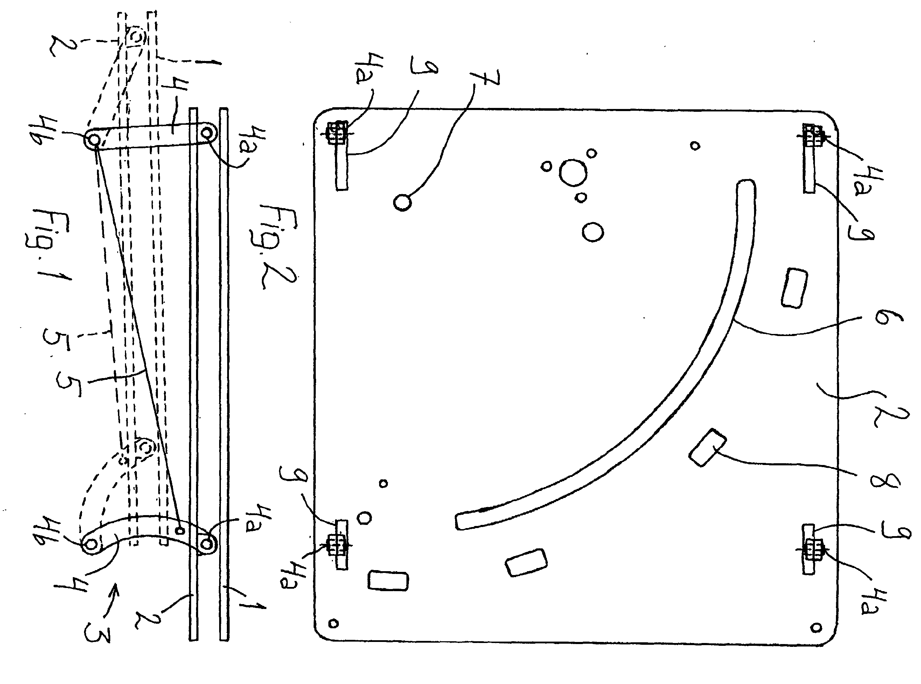

Fig. 1 shows a side-view of a turning device. The body 2 that remains stationary on the horizontal plane when the turning device is fixed to a vehicle, is formed by a lower plate on top of which an upper plate 1 is journalled, said upper plate turning in a known manner in a plane parallel to the lower plate, i.e. approximately in the horizontal plane away from the lower plate, when a seat attached thereon is turned outwards to receive the person sitting thereon, and back on the upper plate when the person has seated and the seat is turned to a travel position. In the turning device it is possible to utilize solutions known in the field, for example solutions presented in the aforementioned patent and utility model, as well as other known solutions, and the entity formed by the upper and lower plates themselves and the coupling together of the plates are not restricted to any particular structure.

According to the invention, a height adjustment mechanism 3 is integrated in the body 2. The mechanism comprises arms 4 articulated at their upper ends to the body 2 of the turning device by means of articulation points 4a, the lower ends of said arms being articulated by articulation points 4b to attachment points, via which the turning device is intended to be fixed to the floor of a vehicle or to another supporting base. The mechanism is provided with an actuator 5 (shown schematically by means of a line), by means of which the arms 4 can be pivoted and locked to a fixed position to adjust the height between the body 2 of the turning device and the attachment points.

Fig. 1 shows arms 4 placed successively on one side of the turning device. In this context, the term successively denotes a successive location in the normal sitting direction (upper and lower plate on top of each other). The articulation points 4a of the upper ends of the arms and the articulation points 4b of the lower ends form the vertexes of an articulated quadrangle. The longer sides of the quadrangle are formed between the upper articulation points 4a approximately on the height of the body 2, and between the lower articulation points 4b approximately on the height of a floor or a corresponding supporting base, respectively, and the arms 4 form the shorter sides of the quadrangle. The actuator is kinetically coupled to the quadrangle in such a manner that the straight line between its points of action (its attachment points) is not parallel to any of the sides of the quadrangle. By changing the length of the actuator 5 it is possible to pivot the arms 4, wherein at the same time the distance of the body 2 in the height direction from the articulation points 4b of the lower ends of the arms and from the attachment points changes, in other words, the height of the turning device can be adjusted, and if the seat is fixed on top of the turning device, its height will also change. By locking the actuator to a rigid state, the turning device can also be kept on the adjusted height. The movement of the actuator for pivoting and locking the arms 4 is attained by means of a hydraulic, pneumatic or electrically operating actuator. A manually operated actuator is also possible.

In the following, the successive arms will be called as a first arm and a second arm, not, however, necessarily referring to the order of the successive arms in the sitting direction, in other words, the first arm can be the rearmost arm or the foremost arm. The movement of the arms is accomplished when the first end of the actuator 5 is pivotally connected to the body or to the first arm 4, and the second end is pivotally connected to the attachment point for the floor or a corresponding base or to the second arm. The solution shown in Fig. 1 is of such a kind that the actuator 5 is fixed between successive arms 4 in such a manner that its first end is pivotally connected to the upper part of the first arm 4 within a distance from the point 4a, and its second end is pivotally connected to the same point 4b (pivotable around the same axis) as the lower end of the second arm 4, where there is also has an attachment point to the floor. In Fig. 1 the changed position and height are illustrated by means of a broken line. In principle, it would be possible to articulate the actuator 5 also at its first end to the articulation point 4a of the first arm 4.

By means of the actuator 5, the shape of the quadrangle can be changed and stiffened irrespective of the attachment points, the only requirement being that the change in the length of the actuator also affects the position of the arms 4. To integrate the actuator to the entity formed by the turning plate, the second end of the actuator 5 is, however, most advantageously always attached to the second arm 4 or to the same part in which the articulation point 4b of its lower end is located. Thus, a separate attachment point on the floor of the vehicle is not necessary for the actuator 5.

If the distance between the articulation points 4a, 4b in the upper and lower end of the foremost arm 4 is equally large as the distance between the articulation points 4a, 4b in the upper and lower ends of the rearmost arm 4, it is possible to utilize the arms to form an articulated parallelogram structure in which the distance between the articulation points 4b of the lower ends of the arms, when fixed to their places, is equally large as the distance between the articulation points in the upper ends 4a of the arms on the body 2. Thus, when the arms are pivoted, the lower plate of the turning device and thereby also the seat always retains its direction. If the arms are of different length and/or the articulation points 4b in their lower ends are positioned at a different distance from each other than the articulation points 4a, a mechanism is accomplished, wherein at the same time when the arms 4 are pivoted, the inclination of the upper and lower plates as well as the inclination of the seat fixed on the turning device changes when the height is changed. Fig. 1 shows a situation, in which the quadrangle in the turning device mounted in its place deviates slightly from a parallelogram, wherein, when the turning device is shifted to a lower level, it also tilts slightly backwards.

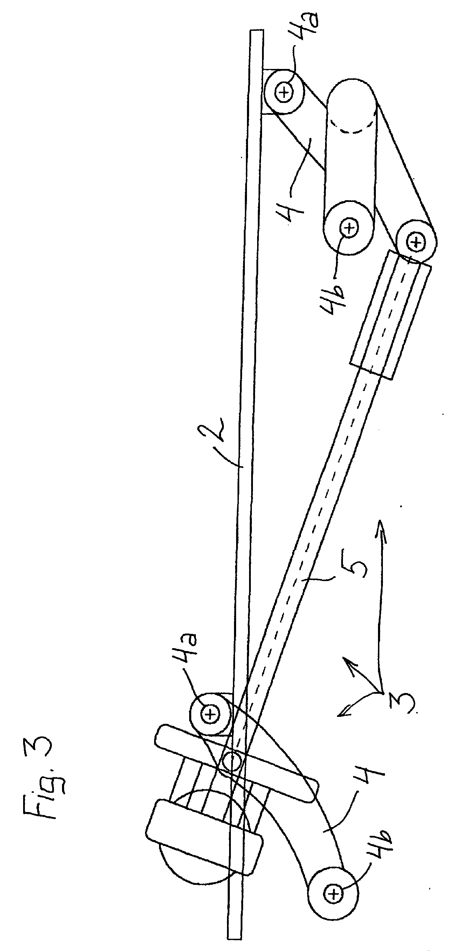

Fig. 3 shows another alternative for a mechanism in which greater motional lengths and smaller forces are required than in Fig. 1. Here, the attachment of the actuator to the first arm 4 is similar to the one described above, but at its second end the actuator 5 is pivotally connected to a lever arm in the second arm 4 on the other side of the articulation point 4b, which lever arm is produced by extending the arm 4. This is possible if there is a space underneath the articulation point 4b. Thus, the arm 4 is a kind of a double-armed lever, the fulcrum of which is the articulation point 4b. Thus, the pivotal motion of the lever arm around the articulation point 4b increases the change of length in the actuator 5, but correspondingly reduces the need for force. The actuator 5 can also be fixed to the articulation point 4a at its first end, or a lever arm can also be formed to the first arm 4 on the other side of the point 4a and the actuator can be attached thereto if it is possible in view of space. Furthermore, the coupling of Fig. 3 is implemented in such a manner that the act of lengthening the actuator (increasing the distance between its points of pivotal connection) causes the arms 4 to pivot upwards and lifts up the turning device, and correspondingly, the shortening of the actuator 5 causes the arms to pivot downwards, and lowers the turning device with respect to the base. In Fig. 3, the actuator 5 is an electric motor and a worm shaft rotated by the same, by means of which the distance between the points of pivotal connection of the actuator can be changed.

Fig. 2 shows a top-view of the turning device in such a manner that the upper plate 1 is removed and the stationary lower plate that forms the body 2 can be seen. Thus, the curved elongated opening 6 and the pivot point 7 in the centre of curvature of the opening that enables the turning of the plates, mentioned above in the preamble, can be seen therein. The supporting member that is fixed to the upper plate and extends through the opening 6 is not shown. Fig. 2 also shows rollers 8 which are attached to the lower plate and support the upper plate during the turning movement. The placement of the upper articulation points 4a of the arms is shown in the corners of the lower plate. The arms 4 can be articulated into brackets located above the plane of the lower plate, wherein they extend through longitudinal slots 9 made in the lower plate, and the space between the plates can thus be utilized. It is, however, possible to articulate the arms 4 at their upper ends brackets formed on the lower surface of the lower plate. Similarly, it is possible, that in successive arms 4, the upper articulation point 4a of the first arm is located above the lower plate and the upper articulation point 4a of the second arm is located below the same. When necessary, the lower plate is also provided with an inlet for leading through the actuator 5, if the other end of the actuator is articulated above the lower plate, for example to an arm 4 extending above the lower plate or to the articulation point 4a of the arm.

By means of suitable couplings, the foremost adjacent arms 4 and the rearmost adjacent arms 4 can be caused to pivot together as pairs, wherein all the arms can be pivoted by means of the actuator 5. The adjacent arms can be connected together for example by means of suitable transversal connecting means, which arrange them as a concurrently turning entity. The arms 4 are connected in the transverse direction already by means of the body 2, i.e. the lower plate, and the lower articulation points 4b can be connected together in the transverse direction by means of a torsionally rigid connection rod. The foremost pair (the arms 4 located in front in the sitting direction) and the rearmost pair (the arms 4 located in the back in the sitting direction) can be coupled to co-operate by any of the above-described manners by means of the actuator 5, wherein the actuator 5 can be attached directly to the arms on one of the edges or to the connecting means connecting the arms in the transverse direction.

The turning device is fixed to the floor of the vehicle by means of the arms 4 through suitable adapter parts. Such adapter parts can be fixed to the lower end of the arms 4, wherein they are pivotally connected to the arms by the articulation points 4b, thereby forming the attachment points of the entire device for the floor of a vehicle, such as a car, or for another part of the vehicle. Already in connection with the installation of the turning device it is possible to adjust the height of the turning device to a suitable level by means of the actuator 5. However, the height can be adjusted continuously during use according to the needs of the user. If the actuator functions by means of a power source, it is thus possible to connect it to suitable control devices in the vehicle, by means of which the height of the seat provided with a turning device can be easily adjusted.

As was mentioned above, the invention is not restricted only to particular turning device structures. It is possible to use the solution according to the Finnish patent 76740 or another device as the turning device. The solution according to the Finnish utility model 1171 is especially well suitable to be used in connection with the turning device according to the invention, wherein the turning device can first be permanently adjusted to a suitable height in the vehicle, and when the seat turns outwards, it is temporarily lifted to the suitable receiving height.

As was disclosed in the above description of the function of the actuator, the height position of the turning device and the seat thereon can be adjusted in a stepless manner. If the actuator is of a variable-length a type, the length to which the actuator is locked can be adjusted in a stepless manner.

Similarly, by means of the height adjustment mechanism, it is already in connection with the installation, possible to position the turning device on the correct height for example with respect to the lower edge of a door, which is advantageous especially if the turning device is of such a type in which the path of motion of the upper element supporting the seat extends outside the door.

## Claims

1. A turning device for turning a seat of a vehicle, which is intended to be attached to a vehicle and includes a body (2) and a part attached turnable thereto, to which part the seat can be fixed, **characterized** in that to the body (2) a height adjustment mechanism (3) is fixed, which includes attachment points for the vehicle and to which an actuator (5) is coupled to move the mechanism (3) and to change the distance between the attachment points and the body (2) of the turning device.

2. The turning device according to claim 1, **characterized** in that the mechanism (3) includes arms (4) attached at their upper ends to the body (2) of the turning device through articulation points (4a), the lower end of said arms containing articulation points (4b) to attachment points for the vehicle, wherein the actuator (5) is arranged to lock the arms (4) to a fixed position to adjust the distance between the body (2) of the turning device and the articulation points (4b) at the lower ends.

3. The turning device according to claim 1 or 2, **characterized** in that the actuator (5) is of a variable-length type, and it is attached at one of its ends to the arm (4) fixed to the body (2) of the turning device by the articulation point (4a) or directly to the body (2).

4. The turning device according to claim 2 or 3, **characterized** in that a foremost arm (4) a the rearmost arm (4) are pivotally connected to the body (2) and they form an articulated quadrangle, for example an articulated parallelogram, the shape of which can be changed by means of the actuator (5).

5. The turning device according to claim 4, **characterized** in that the actuator (5) is at its first end attached to a first arm (4) or to the body and at its second end to a second arm (4) or to the attachment point for the vehicle.

6. The turning device according to any of the claims 3 to 5, **characterized** in that the actuator (5) attached to the arm (4) is fixed to a lever arm formed on the other side of the articulation point of the arm.

7. The turning device according to any of the preceding claims 2 or 6, **characterized** in that both edges of the turning device have a foremost arm (4) and a rearmost arm (4) pivotally connected thereto.

8. The turning device according to claim 7, **characterized** in that the foremost arms (4) and the rearmost arms (4) are connected together with transversal connecting means to pivot concurrently as a foremost pair and a rearmost pair.
